# EUROPEAN PATENT SPECIFICATION

(11) **EP 1 140 707 B1**
(45) Date of publication and mention of the grant of the patent: **17.03.2004**
(21) Application number: 99941816.3
(22) Date of filing: 26.08.1999
(51) Int. Cl.: C02F 3/30

(54) **BIOLOGICAL TREATING APPARATUS FOR TANNERY WASTE WATER AND FOR REDUCTION OF ITS SLUDGE**
VORRICHTUNG ZUR BEHANDLUNG VON GERBEREIABWÄSSERN UND ZUR VERMINDERUNG DES SCHLAMMS
APPAREIL DE TRAITEMENT BIOLOGIQUE POUR EAUX RESIDUAIRES DE TANNERIE ET POUR LA REDUCTION DES BOUES

(30) Priority: 27.11.1998 KR 9851250
(43) Date of publication of application: 10.10.2001
(73) Proprietor: Agency for Technology and Standards, Kwacheon-City, Kyunggi-do 427-010 (KR)
(72) Inventor: KIM, Jo, Woong, Seoul 137-060 (KR); LEE, Jung, Bock, Kwacheon-City Kyunggi-do 427-050 (KR); LIM, Yoon, Taek, Euwang-City Kyunggi-do 437-070 (KR); KIM, Du, Hyun, Suwon-City Kyunggi-do 440-320 (KR)
(74) Representative: Käck, Jürgen
(86) International application number: PCT/KR1999/000484
(87) International publication number: WO 2000/032522

(56) References cited:
- EP-A1- 0 497 114
- EP-A1- 0 849 230
- BE-A6- 1 007 635
- DE-A1- 4 204 590
- US-A- 5 160 043
- US-A- 5 380 438

## Description

### TECHNICAL FIELD

The present invention relates to a waste water treating apparatus in combination of A/O(Anoxic/Oxic) method and MLE(Modified Ludzack-Ettinger) method. More particularly, this invention pertains to a biological treating apparatus for tannery waste water and for the reduction of its sludge, in which a sludge and liquor recycle from sedimentation tank is appropriately modified to biologically process high organic tannery waste water containing a great amount of chrome, sulfide, etc., without through a chemical-physical pretreatment, and also to reduce its sludge formed.

### BACKGROUND ART

Generally speaking, the leather manufacturing industries produce malignant waste water of high sulfides content, together with a very high organical nitrogen load, most of which discharge incomplete treated waste water to rivers, lakes, marshes, seashores, or bays, causing one of serious problems of water contamination. Additionally, a great amount of sludge (impurities mixed in water or oil and precipitated on the bottom) is made in the treating of waste water so that its environmental treating cost occupies about 10% of the production cost.

Due to such problems, commonly used zones such as lakes, marshes, bays, or inland sea, and small and medium rivers are being seriously polluted. Therefore, the environmental guide lines of nitrogen (N), phosphorus (P), COD (Chemical Oxygen Demand) and BOD (Biochemical Oxygen Demand) in relation with lakes, marshes, bays or inland sea are being currently satisfied very low. Furthermore, because many of rivers, lakes, marshes, or dams are used as the source of water, their mustiness, filtering impediment, abnormal growth of poisoned algae emerge as vital environment problems.

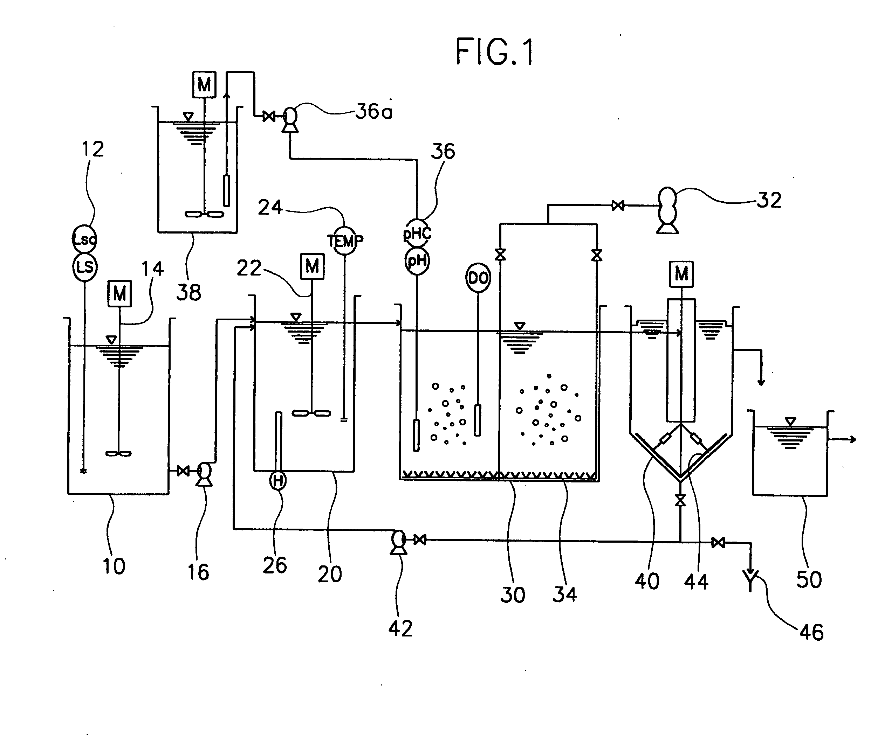

FIG. 1 is a construction diagram of an existing waste water treating apparatus using a conventional A/O method. Referring to FIG. 1, using the activated sludge (various kinds of organic matters contained in sewage or industrial waste water are continuously incubated in an anoxic condition or in the presence of dissolved oxygen and eliminated through the complicated actions of aggregation, adsorption, oxidation, decomposition, and precipitation), the A/O method is carried out in such a way that denitrification and organic matter removal are performed in a anoxic tank 20, and nitrification and phosphorus removal in an oxic tank 30, and nitrate formed by the nitrification and the activated sludge are recycled to anoxic tank 20 and the supernatant is discharged from a sedimentation tank 40.

As mentioned above, the waste water treating apparatus using A/O method comprises a raw waste water equalization tank 10, anoxic tank 20, oxic tank 30, sedimentation tank 40, drain tank 50, means for agitating waste water entering raw waste water equalization tank 10, anoxic tank 20 and sedimentation tank 40, means for controlling the incoming flow of the raw waste water coming into raw waste water equalization tank 10, means for controlling the temperature of the waste water coming into anoxic tank 20, means for controlling the pH of the waste water entering oxic tank 30, means for supplying oxygen to oxic tank 30, and means for recycling the surplus or excess sludges of sedimentation tank 40 to anoxic tank 20.

The operation of the A/O process for waste water treating is described below. First of all, the raw waste water coming into raw waste water equalization tank 10 during the step of storing raw waste water running out of factories is controlled by a waste water flow controller 12 so that only a certain amount thereof comes in. The incoming waste water is agitated by a raw waste water agitator 14.

A predetermined amount of the raw waste water agitated by raw waste water agitator 14 continuously goes into anoxic tank 20 by means of raw waste water supply pump 16. The waste water coming into anoxic tank 20 is agitated by another agitator 22 for a predetermined period to proceed the anoxic condition. The waste water in anoxic tank 20 is maintained at a temperature appropriate for microbe incubation by a temperature controller 24 and heater 26.

Meanwhile, the waste water entering anoxic tank 20 stays in anoxic tank 20 for a predetermined time, and then goes into oxic tank 30 along with the activated sludge due to the difference of water level. The waste water going into oxic tank 30 is provided with air by a blower 32 and refuser 34 to proceed the oxic condition. During this procedure the waste water is nitrificated, and its pH is lowered due to the nitrification. Because of the lowering of pH, a pH controller 36 controls a pH control pump 36a so that NaOH (one of alkali solutions) is supplied to oxic tank 30 from a PH control tank 38 until the pH of the waste water contained in oxic tank 30 arrives at an appropriate level.

The waste water staying in oxic tank 30 for a predetermined time flowes into sedimentation tank 40 along with the activated sludge due to the difference of water level. The activated sludge entered is settled, and the supernatant is released through a drain tank 50.

A predetermined amount of the activated sludge precipitated in sedimentation tank 40 is sent back to anoxic tank 20 by a sludge return pump 42. Here, a scraper 44 provided in sedimentation tank 40 gathers up the activated sludge adhered on the bottom of sedimentation tank 40 to thereby facilitate the returning of the activated sludge. The remaining sludge is discharged through exit 46 formed on the bottom of sedimentation tank 40.

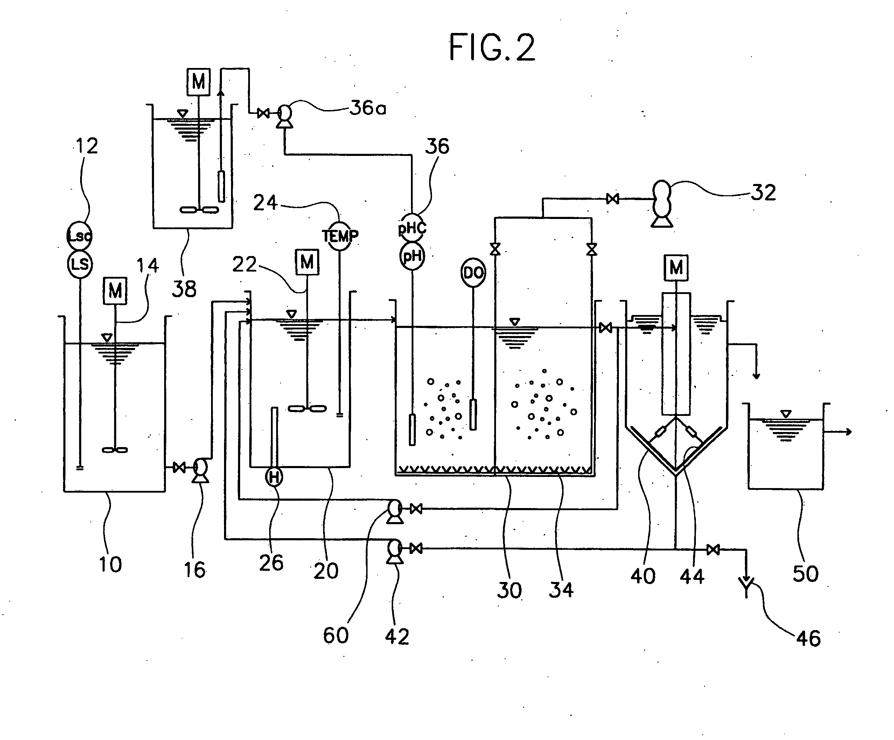

FIG. 2 is a construction diagram of a conventional waste water treating apparatus using MLE method. Referring to this drawing, this equipment using MLE (Modified Ludzack-Ettinger) is very similar to the apparatus using A/O shown in FIG. 1 in terms of structure and operation. The only difference is that the apparatus using MLE internally sends back the sludge left in oxic tank 30 to anoxic tank 20. Specifically, a pipe and return pump 60 are installed between oxic tank 30 and sedimentation tank 40 so that the sludge of oxic tank 30 can be returned to anoxic tank 20.

Those waste water treating systems using A/O and MLE methods perform the treating of waste water through continuous reactions not through graded reactions.

The apparatus using A/O shown in FIG. 1, the simplest method in biological denitrification, is less than 60% in the rate of denitrification. In case nitrogen/phosphorus content is high as in high-density industrial waste water, the treating efficiency is low. For this reason, the apparatus is suitable for medium-small industrial waste water treating or small living sewage.

The denitrification of MLE varies with the returning rate of sludge. For higher efficiency, undesirably the reactors must become bigger and the time for waste water to stay in the respect reactors increase. With the waste water treating systems shown in FIGS. 1 and 2, waste water of a high density and containing a great amount of chrome, sulfide, etc., such as tannery waste water, must be biologically processed after removing matters possibly affecting biological treating.

### DISCLOSURE OF INVENTION

Therefore, in order to overcome such drawbacks of the prior art, an objective of the present invention is to provide a biological treating apparatus for tannery waste water and for the purpose of the reduction of sludge, the apparatus refining tannery waste water having much nitrogen content, significant change of load and a great amount of harmful matters like heavy metals, without through physicochemical treating.

Another objective of the present invention is to provide a biological treating apparatus for tannery waste water and for the purpose of the reduction of sludge, the apparatus treating a great amount of waste water in a short time, suitable for a huge amount of industrial waste water.

Still another objective of the present invention is to provide a biological treating apparatus for tannery waste water and for the reduction of sludge, the apparatus enabling anoxic digestion and denitrification to occur in a single reactor, to thereby enhance the treating efficiency of organic high-density poisonous waste water.

Yet another objective of the present invention is to provide a biological treating apparatus for tannery waste water and for the reduction of sludge, in which the activated sludge is not removed in a precipitation but sent back to a first anaerobic/anoxic tank and decomposed by the anoxic digestion in order to be used as the source of carbon easily lacking in denitrification and thus need no external supply of carbon.

Another objective of the present invention is to provide a biological treating apparatus for tannery waste water and for the reduction of sludge, in which the supernatant of the precipitation is sent back to the first anaerobic/anoxic tank to be mixed with the raw waste water incoming, and in which nitrate not perfectly removed in the second anoxic tank is eliminated through denitrification.

Still another objective of the present invention is to provide a biological treating apparatus for tannery waste water and for the reduction of sludge, in which anoxic digestion and denitrification are allowed to occur in a single chamber, reducing the area of site but enhancing the treating efficiency of high-density harmful waste water.

To accomplish the objective of the present invention, there is provided a waste water treating apparatus for tannery waste water and for sludge reduction, comprising: a raw waste water storing tank for storing raw waste water; a first anaerobic/anoxic tank for causing the waste water coming from the raw waste water storing tank to continuously undergo anoxic digestion and denitrification; a septum for dividing the inside of the first anaerobic/anoxic tank while installed movably up and down so that the divided parts communicate with each other; a sludge drain valve for removing activated sludge contained in the first anaerobic/anoxic tank; first and second oxic tanks for continuously incubating the mixed group of microbes in the condition of oxygen by means of various organic matters of waste water coming from the first anaerobic/anoxic tank as nutrient media; means for pumping air to the first and second oxic tanks; a second anoxic tank for continuously incubating the mixed group of microbes in an anoxic condition, taking as the nutrient media various organic matters of the waste water coming from the second oxic tank; a sedimentation tank for precipitating the activated sludge coming from the second anoxic tank; means for sending back the activated sludge sunk on the sedimentation tank to the first anaerobic/anoxic tank and the first oxic tank; and means for sending back part of the supernatant of the sedimentation tank to the first anaerobic/anoxic tank to mix it with the raw waste water incoming.

The apparatus further comprises a drain tank for discharging the waste water incoming from the sedimentation tank.

The apparatus further comprises means for agitating the waste water incoming into the raw waste water storing tank, the first anaerobic/anoxic tank, and the second anoxic tank.

The apparatus further comprises temperature control means for maintaining the waste water coming into the first anaerobic/anoxic tank at an appropriate temperature for microbial incubation.

The temperature maintaining means comprises: a temperature control circuit internally installed in the first anaerobic/anoxic tank; and a heater installed in the first anoxic tank and controlled by the temperature control circuit.

The apparatus further comprises means for controlling the pH of the waste water coming into the first oxic tank and the second anoxic tank.

The pH controlling means comprises: a pH control circuit; an alkali solution tank for storing pH controlling solution; and a driving pump controlled by the pH control circuit for carrying alkali solution to the first oxic tank and the second anoxic tank from the alkali solution tank.

The sedimentation tank comprises a scraper rotably installed for gathering up the activated sludge adhered on the bottom of the chamber.

Due to the difference of water level, the waste water is entered into the first oxic tank from the first anoxic tank, into the second oxic tank from the first oxic tank, into the second anoxic tank from the second oxic tank, and into the sedimentation tank from the second anoxic tank.

The biological treating apparatus for tannery waste water and for sludge reduction of the present invention is made in such manner that tannery waste water of high density is directly entered to the first anaerobic/anoxic tank without through physicochemical pretreating so that anoxic digestion is carried out in the first part of the septum and denitrification in the second. Only the supernatant of the first anaerobic/anoxic tank is entered to the first oxic tank due to the difference of water level, and the sludge accumulated is periodically removed in the first anaerobic/anoxic tank.

### BRIEF DESCRIPTION OF DRAWINGS

These and other features of the invention will be understood more clearly from the following description, read in conjunction with the drawings, in which:
FIG. 1 is a construction diagram of a conventional waste water treating apparatus using A/O method;
FIG. 2 is a construction diagram of another conventional waste water treating apparatus using MLE method;
FIG. 3 is a construction diagram of one embodiment of a waste water treating apparatus of the present invention;
FIG. 4 is an enlarged construction diagram of important components of the waste water treating apparatus of the present invention;
FIG. 5 is an enlarged plan view of the present invention showing the internal returning position;

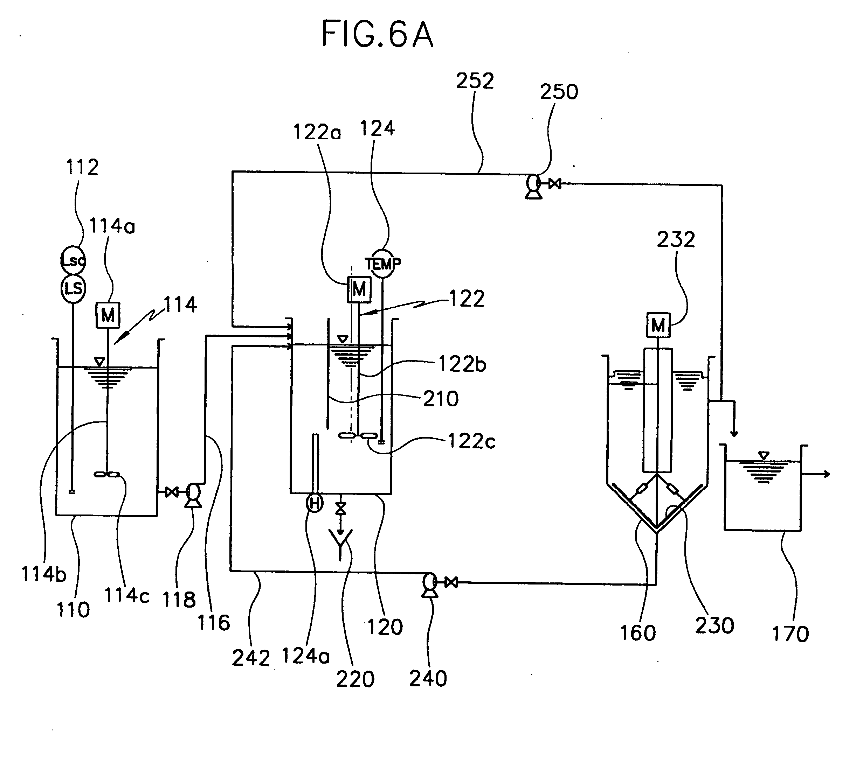

FIG. 6A is a state diagram of the raw waste water incoming procedure of the first anaerobic/anoxic tank according to the present invention;

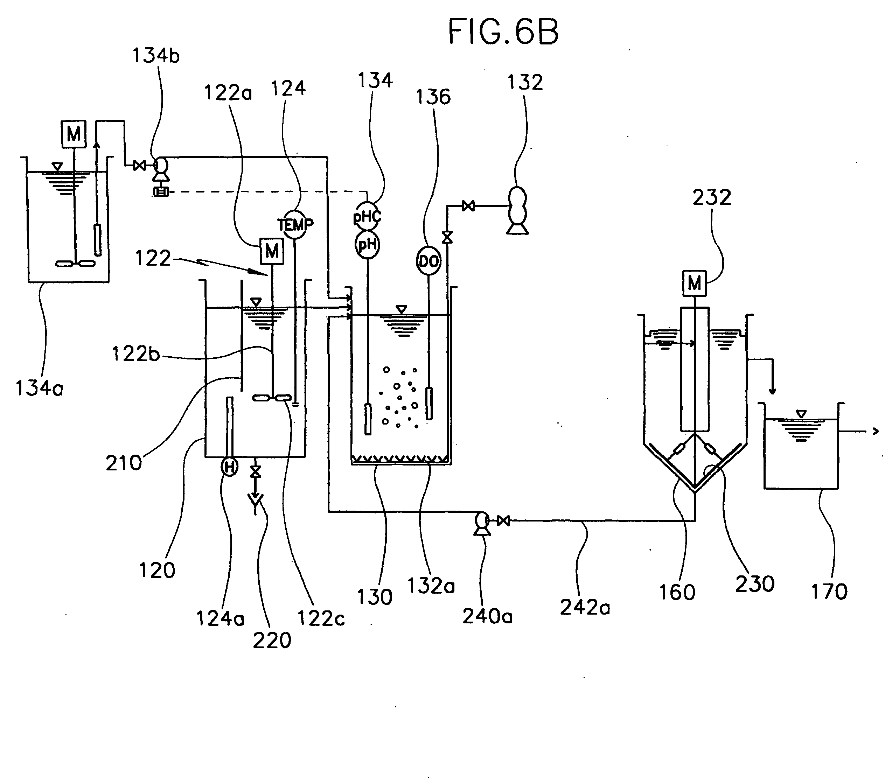

FIG. 6B is a state diagram of the waste water incoming procedure of the first oxic tank according to the present invention;

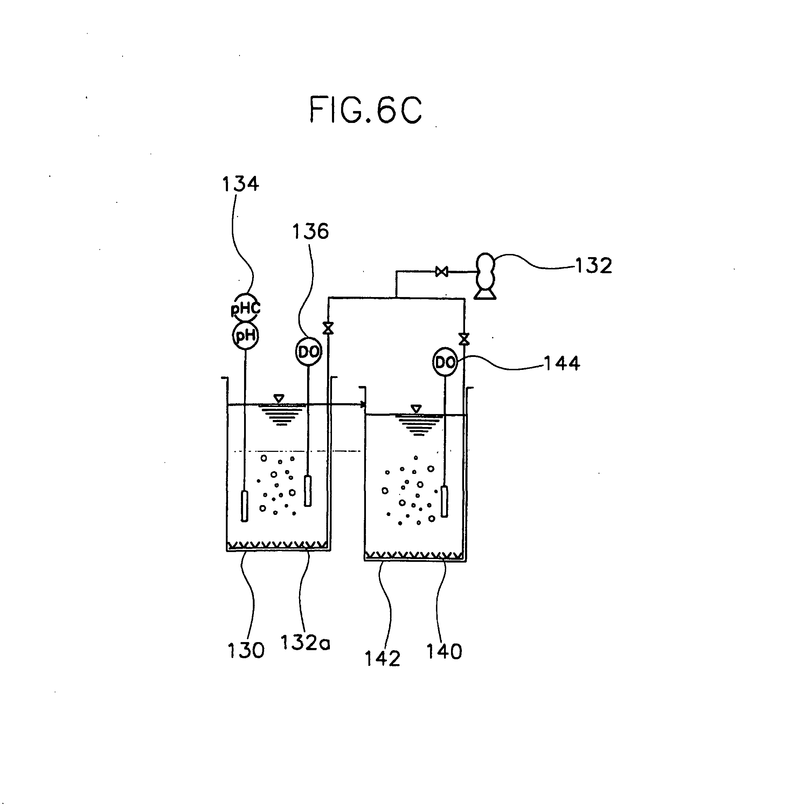

FIG. 6C is a state diagram of the waste water incoming procedure of the second oxic tank according to the present invention;

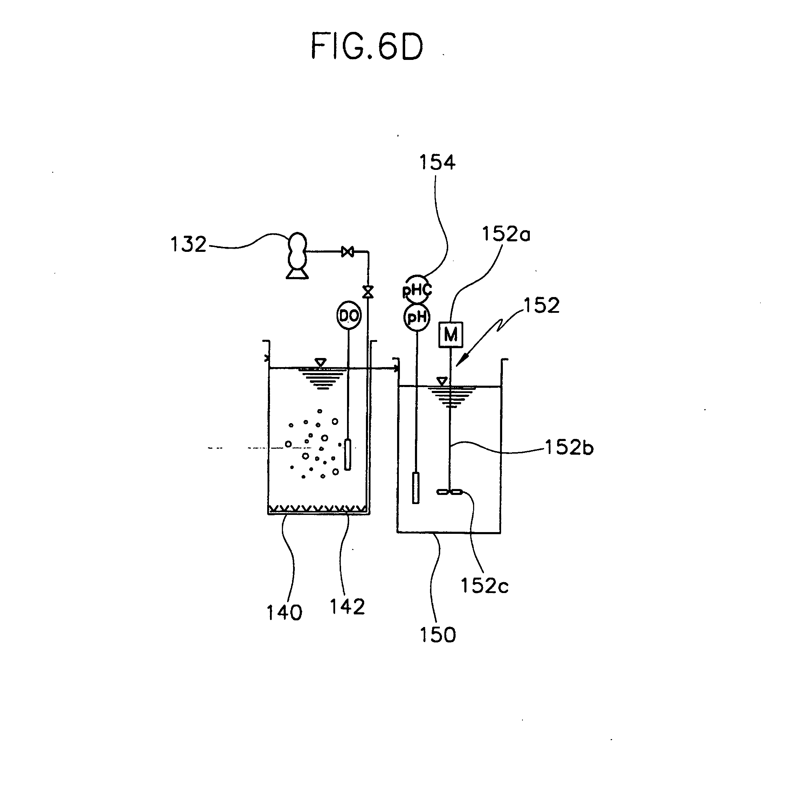

FIG. 6D is a state diagram of the waste water incoming procedure of the second anoxic tank according to the present invention;

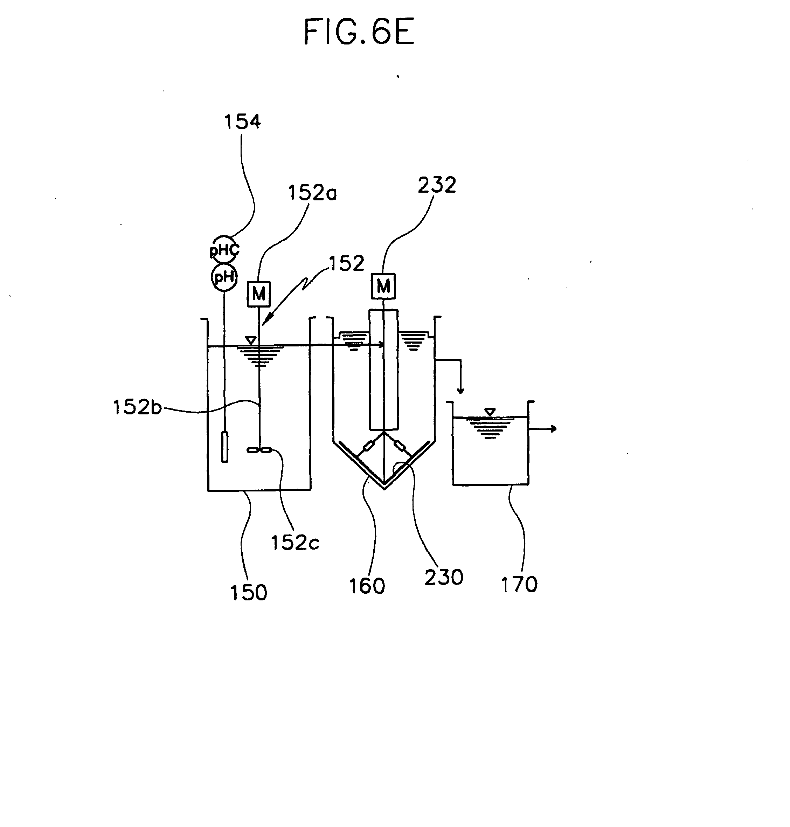

FIG. 6E is a state diagram of the operation procedure of the sedimentation tank and drain tank according to the present invention.

### BEST MODE FOR CARRYING OUT THE INVENTION

Hereinafter, a preferred embodiment of the present invention will be described below with reference to the attached drawings.

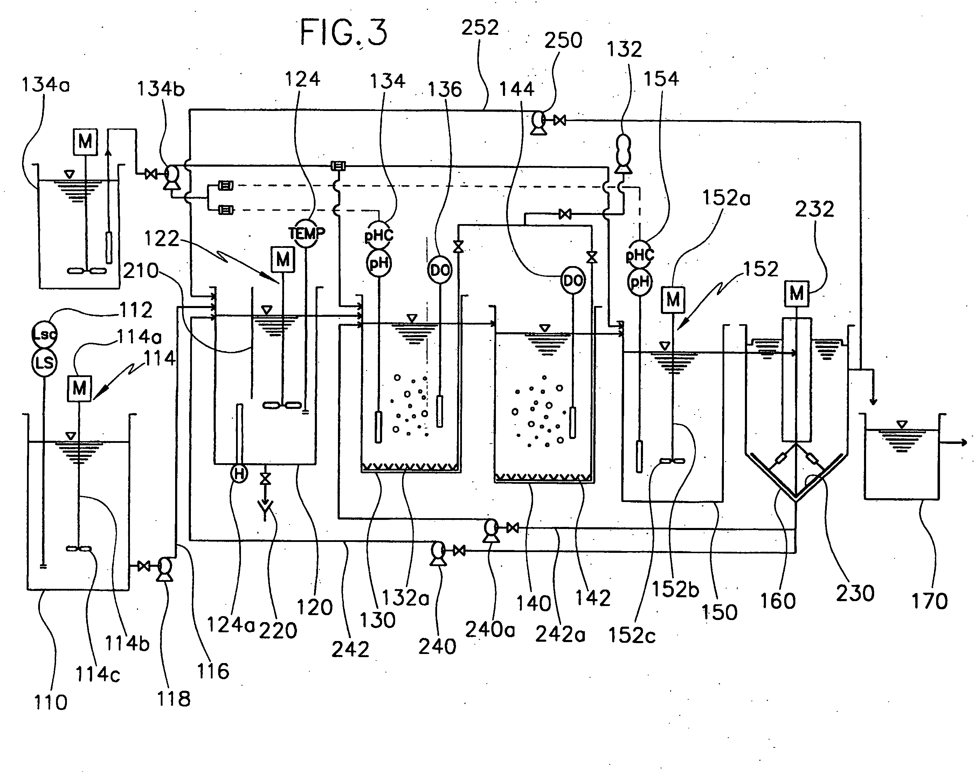

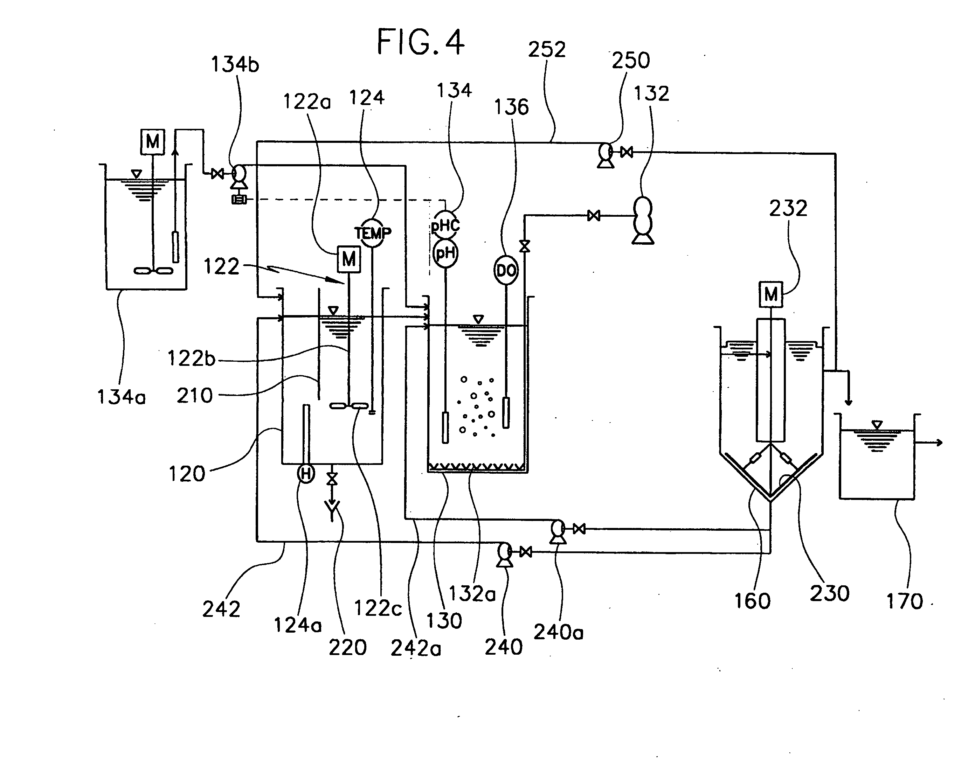

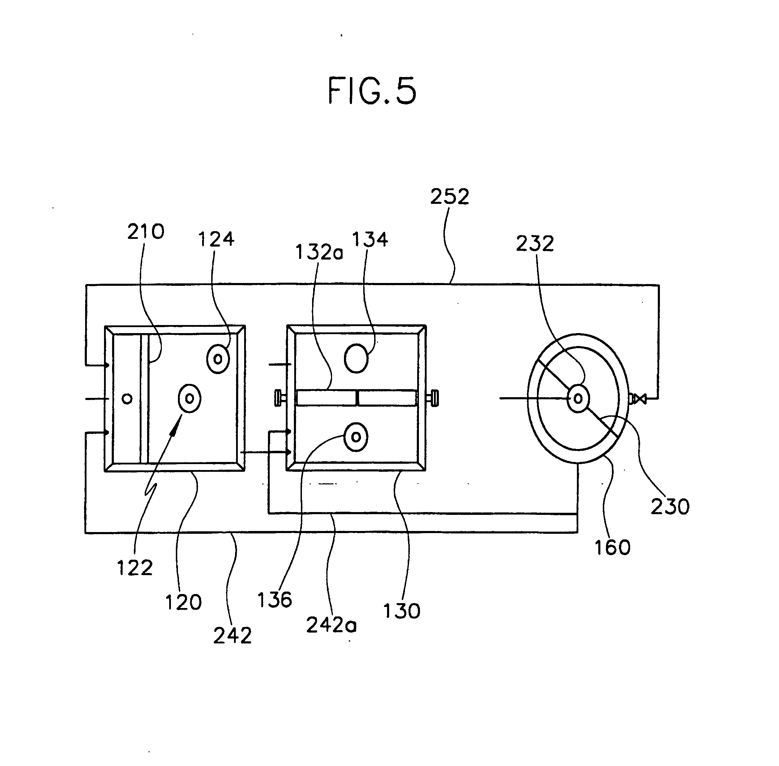

Referring to FIGS. 3, 4 and 5, one embodiment of the waste water treating apparatus of the present invention briefly consists of raw waste water storing means, first anaerobic/anoxic reacting means, first and second oxic reacting means, second anoxic reacting means, processed waste water collecting means, and processed water discharging means.

Specifically, the waste water treating apparatus of the present invention additionally comprises a septum 210 installed in the first anoxic reacting means, a sludge drain valve 220 installed on the bottom of the first anoxic reacting means, a scraper 230 rotably installed in precipitation means to gather up the activated sludge adhered on the precipitation means, means for sending back the sludge precipitated in the precipitation means to the first anaerobic/anoxic reacting means and the first oxic reacting means, means for sending the supernatant of the precipitation means back to the first anoxic reacting means to be mixed with the raw waste water incoming, means for pouring air into the first oxic reacting means and the second oxic reacting means, waste water agitating means, means for maintaining the waste water incoming to the first anaerobic/anoxic reacting means at an appropriate temperature for allowing microbes to be incubated, and means for controlling the pH of the waste water incoming to the first oxic reacting means and the second anoxic reacting means.

The raw waste water storing means is designed to keep the industrial waste water (tannery waste water) produced from factories, comprising a raw waste water storing tank 110 for storing the raw waste water, a waste water incoming flow controlling circuit 112 for controlling the incoming flow of the waste water incoming to the raw waste water storing tank 110, and a raw waste water agitator 114 for agitating the raw waste water kept in raw waste water storing tank 110. The agitator 114 has a driving motor 114a, rotation shaft 114b, and rotation impeller 114.

The waste water incoming flow controlling circuit 112 includes an incoming flow sensor for detecting the change of flow of the raw waste water incoming into raw waste water storing tank 110 so that only a predetermined amount is controlled to go into raw waste water storing tank 110.

The first anaerobic/anoxic reacting means refines the incoming waste water by continuously bringing about anoxic digestion and denitrification. This means comprises a first anaerobic/anoxic tank 120 for storing the waste water incoming from raw waste water storing tank 110 and making it react, an agitator 122 for agitating the waste water incoming, means for maintaining the incoming waste water at an appropriate temperature, a septum 210 installed in the first anaerobic/anoxic tank 120, and an outlet 220 installed under the first anaerobic/anoxic tank 120 for discharging sludge.

The first anaerobic/anoxic tank 120 is connected to raw waste water storing tank 110 by means of raw waste water supply conduit 116. On one side of raw waste water supply conduit 116, raw waste water supply pump 118 is provided. Through raw waste water supply pump 118, the raw waste water kept in raw waste water storing tank 110 is carried to the first anaerobic/anoxic tank 120. Here, raw waste water feeding pump 118 may be provided in plurality, depending upon the waste water treating apparatus' capability.

The agitator 122 installed in the first anaerobic/anoxic tank 120 agitates the waste water incoming to the first anaerobic/anoxic tank 120 from raw waste water storing tank 110. Here, agitator 122 consists of driving motor 122a, rotation shaft 122b, and rotation impeller 122c.

The waste water temperature maintaining means installed in the first anoxic reacting means includes a temperature controller 124 equipped with a sensor for detecting the temperature of the waste water contained in the first anaerobic/anoxic tank 120, and a heater 124a controlled by temperature controller 124 for heating the waste water in the first anaerobic/anoxic tank 120. The temperature controller 124 controls heater 124a so that the waste water contained in the first anaerobic/anoxic tank 120 is maintained at an appropriate temperature for microbial incubation. Meanwhile, the first anaerobic/anoxic tank 120's temperature is between 20 and 30 °C, preferably 25°C.

The septum 210 internally installed in the first anaerobic/anoxic tank 120 is movable up and down. The septum divides the first anaerobic/anoxic tank 120 into the first and second parts, which can communicate with each other through under the septum. It is made that in the first part of the first anaerobic/anoxic tank 120, anoxic digestion happens, and that in the second part, denitrification does.

The sludge drain valve 220 provided under the first anaerobic/anoxic tank 120 is to periodically draw off the sludge piled up on the bottom of the first anaerobic/anoxic tank 120.

The first and second oxic reacting means supplies a sufficient amount of oxygen to the waste water undergoing the first anaerobic/anoxic reaction in order to remove nitrogen present in the waste water through nitrification. This means includes a first oxic tank 130 for causing the waste water incoming from first anaerobic/anoxic tank 120 to react in an oxygen condition, a second oxic tank 140 for causing the waste water incoming from the first oxic tank 130 in an oxygen condition, means for pumping air to the first and second oxic tanks 130 and 140, means for controlling the pH of the waste water incoming into the first oxic tank 130, and means for measuring the amount of oxygen present in the first and second oxic tanks 130 and 140.

The first oxic tank 130 is installed lower than the first anaerobic/anoxic tank 120, and second oxic tank 140 than the first oxic tank 140 so that the waste water coming into the first oxic tank 130 from the first anaerobic/anoxic tank 120 or into the second oxic tank 140 from the first oxic tank 130 is entered due to the difference of water level between the first anaerobic/anoxic tank 120 and the first oxic tank 130 or between the first oxic tank 130 and second oxic tank 140.

The air pumping means installed in the first and second oxic tanks 130 and 140 supplies oxygen to the waste water in the first and second oxic tanks 130 and 140 in order to proceed an oxic reaction, the means comprising a blower 132 and refusers 132a and 142 connected to blower 132 for forming bubbles in the first and second reactors 130 and 140, respectively. Here, blower 132 may be provided in plurality in relation with the size of the waste water treating apparatus.

The pH control means controls the pH of waste water in order to create nitrification in a condition suitable for microbial incubation while a predetermined amount of waste water is filled in the first oxic tank 130. This means comprises a pH controller 134 with a sensor for measuring the pH of the waste water stored in the first oxic tank 130, a PH control tank 134a for storing NaOH (one of alkali solutions), pH controlling solution, and a pH control pump 134b for carrying the NaOH solution stored in PH control tank 134a to the first oxic tank 130. Here, pH controller 134 is electrically connected to pH control pump 134b to thereby control pH control pump 134b until the waste water in the first oxic tank 130 arrives at an appropriate pH. The pH of waste water is preferably between 7 and 9, most desirably 8.5. The amount of oxygen present in the waste water contained in the first and second oxic tanks 130 and 140 can be confirmed with DO(dissolved oxygen) sensors 136 and 144 installed in the first and second oxic tanks 130 and 140.

The second anoxic reacting means removes the nitrate produced in the first and second oxic tanks 130 and 140, comprising a second anoxic tank 150 for storing the waste water incoming from second oxic tank 140, an agitator 152 for agitating the waste water coming into second anoxic tank 150, and pH control means for controlling the pH of the waste water coming into second anoxic tank 150. Here, second anoxic tank 150 is installed lower than second oxic tank 140, and the waste water incoming into second anoxic tank 150 from second oxic tank 140 can be entered due to the difference of water level between second oxic tank 140 and second anoxic tank 150.

The agitator 152 agitates the activated sludge of second anoxic tank 150 so that the raw waste water and activated sludge are mixed well for denitrification and that the activated sludge smoothly enters sedimentation tank 160. Agitator 152 is composed of driving motor 152a, rotation shaft 152b, and rotation impeller 152c.

Similar to the pH control means of first oxic tank 130, the pH control means installed in second anoxic tank 150 controls the pH of waste water in order to create nitrification in an appropriate condition for microbial incubation while a predetermined amount of waste water comes into second anoxic tank 150. This means comprises a pH controller 154 with a sensor for measuring the pH of the waste water stored in the second oxic tank 150, a PH control tank 134a for storing NaOH (one of alkali solutions), pH controlling solution, and a pH control pump 134b for carrying the NaOH solution stored in PH control tank 134a to the second anoxic tank 150. Here, pH controller 154 is electrically connected to pH control pump 134b to thereby control pH control pump 134b until the waste water in the second anoxic tank 150 arrives at an appropriate pH.

The precipitation means precipitates the activated sludge coming from second anoxic tank 150 in order to separate it from processed water. This means comprises a sedimentation tank 160 for storing and precipitating processed water incoming from second anoxic tank 150, and a scraper 230 rotably installed by driving motor 232 in order to gather up the activated sludge adhered on the bottom of sedimentation tank 160.

In the sedimentation tank 160 the processed water from second anoxic tank 150 is sunk and only its supernatant goes into drain tank 170 and then to rivers.

Meanwhile, sedimentation tank 160 has means for sending back the precipitated activated sludge to first anaerobic/anoxic tank 120 and first oxic tank 130, the first anaerobic/anoxic tank 120 being thrown with remaining sludge and the first oxic tank 130 maintaining the amount of microbes.

The activated sludge returning means periodically sends back the activated sludge to the first anaerobic/anoxic tank 120 and first oxic tank 130 through sludge return pumps 240 and 240a and pipes 242 and 242a manipulated by a controller (not shown) of the waste water treating apparatus.

The sedimentation tank 160 has means for sending back part of supernatant (processed water) of sedimentation tank 160 to first anaerobic/anoxic tank 120 in order to completely remove remaining nitrate and organic compounds. The supernatant returning means consists of supernatant return pump 250 and pipe 252.

The reason to send back part of the supernatant (processed water) to first anaerobic/anoxic tank 120 is to decompose the activated sludge by anoxic digestion in first anaerobic/anoxic tank 120 not in sedimentation tank 160 so that the decomposed sludge can be used as the source of carbon easily lacking in denitrification, needing no external supply of carbon.

In short, the waste water treating apparatus of the present invention comprises raw waste water storing tank 110 for storing raw waste water, first anaerobic/anoxic tank 120 for causing the waste water coming from raw waste water storing tank 110 to continuously undergo anoxic digestion and denitrification, septum 210 for dividing the inside of first anaerobic/anoxic tank 120 while installed movably up and down so that the divided parts communicate with each other, sludge drain valve 220 for removing the activated sludge contained in first anaerobic/anoxic tank 120, first and second oxic tanks 130 and 140 for continuously incubating the mixed group of microbes in the condition of oxygen by means of various organic matters of waste water coming from first anaerobic/anoxic tank 120 as nutrient media, means for pumping air to first and second oxic tanks 130 and 140, second anoxic tank 150 for continuously incubating the mixed group of microbes in an anoxic condition, taking as the nutrient media various organic matters of the waste water coming from second oxic tank 140, sedimentation tank 160 for precipitating the activated sludge coming from second anoxic tank 150, means for sending back the activated sludge sunk on sedimentation tank 160 to first anaerobic/anoxic tank 120 and first oxic tank 130, and means for sending back part of the supernatant of sedimentation tank 160 to first anaerobic/anoxic tank 120 to mix it with the raw waste water incoming.

The waste water treating apparatus additionally comprises drain tank 170 for discharging the waste water incoming from sedimentation tank 160, agitators 114, 122, 152 for agitating the waste water respectively incoming into raw waste water storing tank 110, first anaerobic/anoxic tank 120, and second anoxic tank 150, temperature control means for maintaining the waste water coming into first anaerobic/anoxic tank 120 at an appropriate temperature for microbial incubation, means for controlling the pH of the waste water coming into first oxic tank 130 and second anoxic tank 150, and a scraper 230 rotably installed in sedimentation tank 160 to gather up the activated sludge adhered on the bottom of sedimentation tank 160.

Referring to FIGS, 3, 4, 5, and 6a-6e, the operation and effect of the biological treating apparatus for tannery waste water and its sludge reduction are described below.

First of all, the tannery waste water produced from a tannery treating factory is filtered by means of a 2mm filter, and then goes into raw waste water storing tank 110. Here, only a predetermined amount of the raw waste water (tannery waste water) comes into raw waste water storing tank 110 by means of waste water flow controller 112.

During the procedure of storing the tannery waste water into raw waste water storing tank 110, agitator 114 is manipulated to agitate the tannery waste water incoming. The tannery waste water agitated by agitator 114 comes into first anaerobic/anoxic tank 120 through raw waste water supply pipe 116 by means of raw waste water feeding pump 118.

The tannery waste water coming into first anaerobic/anoxic tank 120 comes into the first part thereof, and the organic matters are decomposed and digested through anoxic digestion for a predetermined time. Then, the waste water flows to the second part of first anaerobic/anoxic tank 120 through under the septum 210 by means of physical agitation by agitator 122. Here, the tannery waste water coming into the second part of first anaerobic/anoxic tank 120 undergoes denitrification for a predetermined time. Through such denitrification nitric acid nitrogen present in the tannery waste water is removed.

Even during the denitrification of the tannery waste water coming into first anaerobic/anoxic tank 120, temperature controller 124 controls heater 124a so that the tannery waste water in first anaerobic/anoxic tank 120 is maintained at a temperature appropriate for microbial incubation.

The tannery waste water whose nitric acid nitrogen is removed to some degree through the denitrification in first anaerobic/anoxic tank 120 enters first oxic tank 130 due to the difference of water level. Here, by means of blower 132 and refuser 132a installed on the inside bottom of first oxic tank 130, air is pumped into the tannery waste water, and nitric acid microbes are continuously incubated to remove ammoniacal nitrogen contained in the tannery waste water.

In order to smoothly create nitrification, the condition where microbes are incubated well, of the waste water in first oxic tank 130, pH controller 134 controls pH control pump 134b so that NaOH, a pH controlling solution, is supplied to first oxic tank 130 from PH control tank 134a until the pH of the tannery waste water in first oxic tank 130 arrives at an appropriate point.

The activated sludge and tannery waste water staying in first oxic tank 130 for a predetermined time enter the second oxic tank 140 due to the difference of water level. The reaction in second oxic tank 140 is handled in the same manner as in the first oxic tank 130. The difference is that pH control is performed only in first oxic tank 130.

The activated sludge and tannery waste water staying in second oxic tank for a predetermined time goes into second anoxic tank 150 due to the difference of water level. The activated sludge and tannery waste water coming into second anoxic tank 150 are agitated by agitator 152 so that nitric acid nitrogen produced from second oxic tank 140 and remaining organic matters are removed up to the legal discharging level.

While the activated sludge and tannery waste water coming into second anoxic tank 150 are agitated, pH controller 154 controls pH control pump 134b to supply alkali solution of PH control tank 134a to second anoxic tank 150 so that the waste water of second anoxic tank 150 is maintained at an appropriate pH.

The activated sludge and processed water refined in second anoxic tank 150 goes into sedimentation tank 160 due to the difference of water level. The mixture of processed water and activated sludge coming from first anaerobic/anoxic tank 150 is separated through physical precipitation so that the supernatant is discharged to the rivers through drain tank 170 and the activated sludge sunk on the bottom of sedimentation tank 160 is sent back to first anaerobic/anoxic tank 120 and first oxic tank 130 through sludge return pumps 240 and 240a and pipes 242 and 242a.

In this situation, scraper 230 installed in sedimentation tank 160 is rotated by means of driving motor 232 to gather the sludge adhered on the bottom of sedimentation tank 160 so that the remaining sludge is smoothly sent back to first anaerobic/anoxic tank 120 and first oxic tank 130.

The activated sludge sent back to first anaerobic/anoxic tank 120 is decomposed by anoxic digestion, to be used as the source of organic matters in denitrification. The remaining sludge sent back to first oxic tank 130 is used to maintain the microbes in first oxic tank 130.

Because, in the first anaerobic/anoxic tank 120, solid matters not decomposed even through anoxic digestion and harmful matters such as chrome, sulfur, etc., are accumulated, the sludge piled in first anaerobic/anoxic tank 120 is periodically removed through sludge drain valve 220.

Meanwhile, part of the supernatant of the processed water coming to drain tank 170 from sedimentation tank 160 is sent back to first anaerobic/anoxic tank 120 through supernatant return pump 250 and pipe 252. The supernatant of the processed water sent back to first anaerobic/anoxic tank 120 is mixed with the raw waste water coming into first anaerobic/anoxic tank 120 from raw waste water storing tank 110, to be thereby used to remove the remaining nitrate and organic compounds.

In the waste water treating apparatus which refines through such reactions, the respective reactions are carried out continuously not in stages. While the tannery waste water comes into raw waste water storing tank 110, the first and second anoxic reactions, first and second oxic reactions, precipitation, discharging, remaining sludge returning, and supernatant returning are progressed continuously.

As above, the biological treating apparatus for tannery waste water and sludge reduction of the present invention is favorable, compared with the conventional biological treating method passing through physicochemical pretreating, in that the time to remove COD, BOD, TSS and TN is two times faster while the removal efficiency is almost similar, that the cost of medicine is reduced by 50%, and that the decrease of sludge is about 40%.

As described above, with the biological treating apparatus for tannery waste water and for sludge reduction of the present invention, tannery waste water known for high density and harmfulness is refined only through biological treating, involving similar treating efficiency but the two-time reduction of treating time, compared with the conventional biological treating after physicochemical pretreating.

Another effect of the present invention is that an existing medicine putting step is eliminated by handling the tannery waste water only through purely biological treating without through physicochemical pretreating step, thereby reducing the cost of medicine by about 50% and accordingly the cost of operation of the apparatus.

Still another effect of the present invention is that the amount of remaining sludge is reduced by about 40% by removing it through anoxic digestion not in the sedimentation tank. Therefore, companies' environmental charges are reduced, and the cost of tannery products is, accordingly.

The present invention can be also applied to the treating of large-volume high-density industrial waste water because a great amount of waste water can be processed in a small area for a short time.

Additionally, the present invention can effectively process industrial waste water containing a lot of harmful matters such as heavy metals, and matters necessary for any processes can be withdrawn and reused because heavy metals are enriched in remaining sludge.

### INDUSTRIAL APPLICABILITY

It will be apparent to the reader that many changes and modifications can be made without departing from the scope of the invention. The waste water treating apparatus of the present invention can be applied to the fields of stockbreeding, livestock food manufacturers, dairy products, sea food canning, smoked sea food, vegetable salting, soybean paste manufacturing, soy manufacturing, synthetic flavoring matter manufacturing, sugar manufacturing, mechanical dyeing, printing, excretion treating, butchery, etc., in addition to the tannery waste water.

## Claims

1. A waste water treating apparatus for tannery waste water and for sludge reduction, comprising:
a raw waste water storing tank for storing raw waste water;
a first anaerobic/anoxic tank for causing the waste water coming from the raw waste water storing tank to continuously undergo anoxic digestion and denitrification;
a septum for dividing the inside of the first anaerobic/anoxic tank while installed movably up and down so that the divided parts communicate with each other;
a sludge drain valve for removing activated sludge contained in the first anaerobic/anoxic tank;
first and second oxic tanks for continuously incubating the mixed group of microbes in the condition of oxygen by means of various organic matters of waste water coming from the first anaerobic/anoxic tank as nutrient media;
means for pumping air to the first and second oxic tanks;
a second anoxic tank for continuously incubating the mixed group of microbes in an anoxic condition, taking as the nutrient media various organic matters of the waste water coming from the second oxic tank;
a sedimentation tank for precipitating the activated sludge coming from the second anoxic tank;
means for sending back the activated sludge sunk on the sedimentation tank to the first anaerobic/anoxic tank and the first oxic tank; and
means for sending back part of the supernatant of the sedimentation tank to the first anaerobic/anoxic tank to mix it with the raw waste water incoming.

2. The apparatus as claimed in claim 1, further comprising a drain tank for discharging the waste water incoming from the sedimentation tank.

3. The apparatus as claimed in claim 2, further comprising means for agitating the waste water incoming into the raw waste water storing tank, the first anaerobic/anoxic tank, and the second anoxic tank.

4. The apparatus as claimed in claim 3, further comprising temperature control means for maintaining the waste water coming into the first anaerobic/anoxic tank at an appropriate temperature for microbial incubation.

5. The apparatus as claimed in claim 4, wherein the temperature maintaining means comprises:
a temperature controller internally installed in the first anaerobic/anoxic tank; and
a heater installed in the first anoxic tank and controlled by the temperature controller.

6. The apparatus as claimed in claim 5, further comprising means for controlling the pH of the waste water coming into the first oxic tank and the second anoxic tank.

7. The apparatus as claimed in claim 6, wherein the pH controlling means comprises:
a pH controller;
an alkali solution tank for storing pH controlling solution; and
a driving pump controlled by the pH controller for carrying alkali solution to the first oxic tank and the second anoxic tank from the alkali solution tank.

8. The apparatus as claimed in claim 7, wherein the sedimentation tank comprises a scraper rotably installed for gathering up the activated sludge adhered on the bottom of the chamber.

9. The apparatus as claimed in any of claims 1-8, wherein due to the difference of water level, the waste water is entered into the first oxic tank from the first anoxic tank, into the second oxic tank from the first oxic tank, into the second anoxic tank from the second oxic tank, and into the sedimentation tank from the second anoxic tank.

## Patentansprüche

1. Abwasserbehandlungsvorrichtung für Gerbereiabwasser und zur Schlammverringerung, mit:
einem Rohabwasser-Lagertank zum Lagern von rohem Abwasser;
einem ersten anaeroben/anoxischen Tank zum Bewirken, dass das vom Rohabwasser-Lagertank stammende Abwasser kontinuierlich einen anoxischen Abbau und eine Denitrifizierung durchmacht;
einer Scheidewand zum Unterteilen des Inneren des ersten anaeroben/anoxischen Tanks, während sie auf- und abbewegbar installiert ist, so dass die unterteilten Teile miteinander in Verbindung stehen;
einem Schlammablassventil zum Entfernen von Belebtschlamm, der im ersten anaeroben/anoxischen Tank enthalten ist;
einem ersten und einem zweiten oxischen Tank zum kontinuierlichen Inkubieren der gemischten Gruppe von Mikroben unter der Bedingung von Sauerstoff mittels verschiedener organischer Stoffe von Abwasser, das vom ersten anaeroben/anoxischen Tank stammt, als Nährmedien;
einem Mittel zum Pumpen von Luft in den ersten und den zweiten oxischen Tank;
einem zweiten anoxischen Tank zum kontinuierlichen Inkubieren der gemischten Gruppe von Mikroben unter einer anoxischen Bedingung, wobei als Nährmedien verschiedene organische Stoffe des Abwassers, das vom zweiten oxischen Tank stammt, genommen werden;
einem Absetztank zum Ausfällen des Belebtschlamms, der vom zweiten anoxischen Tank stammt;
einem Mittel zum Zurückschicken des Belebtschlamms, der im Absetztank abgesunken ist, zum ersten anaeroben/anoxischen Tank und zum ersten oxischen Tank; und
einem Mittel zum Zurückschicken eines Teils des Überstands des Absetztanks zum ersten anaeroben/anoxischen Tank, um ihn mit dem eingehenden rohen Abwasser zu vermischen.

2. Vorrichtung nach Anspruch 1, welche ferner einen Entwässerungstank zum Abführen des vom Absetztank einströmenden Abwassers umfasst.

3. Vorrichtung nach Anspruch 2, welche ferner ein Mittel zum Rühren des Abwassers umfasst, das in den Rohabwasser-Lagertank, den ersten anaeroben/anoxischen Tank und den zweiten anoxischen Tank einströmt.

4. Vorrichtung nach Anspruch 3, welche ferner ein Temperaturregelungsmittel zum Halten des in den ersten anaeroben/anoxischen Tank gelangenden Abwassers auf einer geeigneten Temperatur zur mikrobiellen Inkubation umfasst.

5. Vorrichtung nach Anspruch 4, wobei das Temperaturhaltemittel umfasst:
einen Temperaturregler, der intern im ersten anaeroben/anoxischen Tank installiert ist; und
eine Heizvorrichtung, die im ersten anoxischen Tank installiert ist und durch den Temperaturregler geregelt wird.

6. Vorrichtung nach Anspruch 5, welche ferner ein Mittel zum Regeln des pH-Werts des in den ersten oxischen Tank und den zweiten anoxischen Tank gelangenden Abwassers umfasst.

7. Vorrichtung nach Anspruch 6, wobei das pH-Regelungsmittel umfasst:
einen pH-Regler;
einen Alkalilösungstank zum Aufbewahren einer pH-Regelungslösung; und
eine durch den pH-Regler geregelte Antriebspumpe zum Überführen von Alkalilösung vom Alkalilösungstank zum ersten oxischen Tank und zum zweiten anoxischen Tank.

8. Vorrichtung nach Anspruch 7, wobei der Absetztank einen Abstreifer umfasst, der zum Aufsammeln des am Boden der Kammer anhaftenden Belebtschlamms drehbar installiert ist.

9. Vorrichtung nach einem der Ansprüche 1-8, wobei aufgrund des Unterschieds des Wasserspiegels das Abwasser vom ersten anoxischen Tank in den ersten oxischen Tank, vom ersten oxischen Tank in den zweiten oxischen Tank, vom zweiten oxischen Tank in den zweiten anoxischen Tank und vom zweiten anoxischen Tank in den Absetztank eingelassen wird.

## Revendications

1. Dispositif de traitement des eaux usées destiné à des eaux usées d'une tannerie et à une réduction des boues, comprenant :
une cuve de stockage d'eaux usées brutes destinée à stocker des eaux usées brutes,
une première cuve anaérobie/anoxique destinée à amener les eaux usées provenant de la cuve de stockage d'eaux usées brutes à subir en continu une digestion anoxique et une dénitrification,
une cloison destinée à diviser l'intérieur de la première cuve anaérobie/anoxique alors qu'elle est installée de façon mobile vers le haut et vers le bas de manière à ce que les parties divisées communiquent les unes avec les autres,
une vanne de purge de boue destinée à éliminer une boue activée contenue dans la première cuve anaérobie/anoxique,
des première et seconde cuves oxiques destinées à incuber en continu le groupe mixte de microbes dans l'état oxygéné au moyen de diverses matières organiques des eaux usées provenant de la première cuve anaérobie/anoxique comme milieu nutritif,
un moyen destiné à pomper de l'air vers les première et seconde cuves oxiques,
une seconde cuve anoxique destinée à mettre à incuber en continu le groupe mixte de microbes dans un état anoxique, en prenant comme milieu nutritif diverses matières organiques des eaux usées provenant de la seconde cuve oxique,
une cuve de sédimentation destinée à précipiter la boue activée provenant de la seconde cuve anoxique,
un moyen destiné à renvoyer la boue activée immergée sur la cuve de sédimentation vers la première cuve anaérobie/anoxique et la première cuve oxique, et
un moyen destiné à renvoyer une partie du surnageant de la cuve de sédimentation vers la première cuve anaérobie/anoxique afin de la mélanger avec les eaux usées brutes entrantes.

2. Dispositif selon la revendication 1, comprenant en outre une cuve de purge destinée à rejeter les eaux usées provenant de la cuve de sédimentation.

3. Dispositif selon la revendication 2, comprenant en outre un moyen destiné à agiter les eaux usées entrantes dans la cuve de stockage d'eaux usées brutes, la première cuve anaérobie/anoxique et la seconde cuve anoxique.

4. Dispositif selon la revendication 3, comprenant en outre un moyen de régulation de température destiné à maintenir les eaux usées arrivant dans la première cuve anaérobie/anoxique à une température appropriée en vue d'une incubation microbienne.

5. Dispositif selon la revendication 4, dans lequel le moyen de maintien de la température comprend :
un contrôleur de température installé de façon interne dans la première cuve anaérobie/anoxique, et
un dispositif de chauffage installé dans la première cuve anoxique et commandé par le régulateur de température.

6. Dispositif selon la revendication 5, comprenant en outre un moyen destiné à réguler le pH des eaux usées arrivant dans la première cuve oxique et la seconde cuve anoxique.

7. Dispositif selon la revendication 6, dans laquelle le moyen de régulation de pH comprend :
un régulateur de pH,
une cuve de solution alcaline destinée à stocker une solution de régulation de pH, et
une pompe d'actionnement commandée par le régulateur de pH, destinée à transporter une solution alcaline vers la première cuve oxique et la seconde cuve anoxique depuis la cuve de solution alcaline.

8. Dispositif selon la revendication 7, dans lequel la cuve de sédimentation comprend une racle installée avec possibilité de rotation destinée à recueillir la boue activée adhérent au fond de la chambre.

9. Dispositif selon l'une quelconque des revendications 1 à 8, dans lequel, en raison de la différence du niveau d'eau, les eaux usées entrent dans la première cuve oxique depuis la première cuve anoxique, dans la seconde cuve oxique depuis la première cuve oxique, dans la seconde cuve anoxique depuis la seconde cuve oxique, et dans la cuve de sédimentation depuis la seconde cuve anoxique.
